**Europäisches Patentamt**

**European Patent Office**

**Office européen des brevets**

(19)

(11) Veröffentlichungsnummer: **0 164 527**
**B1**

(12) ## EUROPÄISCHE PATENTSCHRIFT

(45) Veröffentlichungstag der Patentschrift:
**07.01.88**

(21) Anmeldenummer: **85104628.4**

(22) Anmeldetag: **17.04.85**

(51) Int. Cl.⁴: **B 65 G 13/075**, B 65 G 47/29

(54) **Vorrichtung zum Trennen von Paletten auf einer Rollenbahn.**

(30) Priorität: **09.05.84 DE 3417158**

(43) Veröffentlichungstag der Anmeldung:
**18.12.85 Patentblatt 85/51**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**DE - A - 3 129 318**
**DE - B - 2 211 982**

(73) Patentinhaber: **Interroll Fördertechnik GmbH & Co. KG,
Postfach, D-5632 Wermelskirchen 2 (DE)**

(72) Erfinder: **vom Stein, Hans, Neuenweg 63,
D-5632 Wermelskirchen 3 (DE)**

(74) Vertreter: **Otto, Dieter, Dr.-Ing. et al, Patentanwälte
Müller-Boré, Deufel, Schön, Hertel Lewald, Otto
Isartorplatz 6 Postfach 26 02 47,
D-8000 München 26 (DE)**

## Beschreibung

Die Erfindung betrifft eine Vorrichtung zum Trennen der auf einer Entnahmeseite auf einer Rollenbahn, insbesondere eines Durchlaufregals, aus einer Entnahmestellung auszulagernden Palette von den über Bremsrollen nachrollenden Paletten mit einer am Ende der Rollenbahn angelenkten Schaltklappe und einem auf Abstand hinter der auszulagernden Palette an der Rollenbahn an einer ersten ortsfesten Achse angelenkten, mit der Schaltklappe über ein Gestänge verbundenen Anschlagriegel, wobei der Anschlagriegel an dem freien Ende eines ersten Schenkels eines Kniehebels angelenkt ist, wobei ein zweiter Schenkel des Kniehebels an einem Lager an der Rollenbahn um eine zweite ortsfeste Achse drehbar angeordnet und das Gestänge mit dem Kniehebel verbunden ist, und wobei an dem Kniehebel ein erster Anschlag für die Begrenzung der Streckbewegung des Kniehebels angeordnet ist und wobei ein erstes Widerlager für den ersten Anschlag vorgesehen ist.

Eine derartige Vorrichtung ist aus der DE-A-3 129 318 bekannt. Dort ist senkrecht zu dem unteren Schenkel des Kniehebels ein Anschlag an dem ortsfesten Gelenk des Kniehebels angeschweisst, und an der Rollenbahn ist ein Widerlager angeordnet, welches aus einer einstellbaren Schraube besteht. Ein Anschlag zur Begrenzung der Einknickstellung des Kniehebels ist bei dieser bekannten Vorrichtung nicht angeordnet. Hinzu kommt, dass der bekannte Anschlag infolge der erforderlichen genauen Winkeleinstellung Fertigungsschwierigkeiten mit sich bringt. Die bekannte Vorrichtung besteht aus einer Vielzahl von Einzelteilen, die zusammengesetzt und angeschweisst werden müssen, und es ist sehr viel Einstellarbeit bei der Montage erforderlich.

Der Erfindung liegt die Aufgabe zugrunde, die bekannte Vorrichtung dahingehend zu verbessern, dass aufwendige Schweiss- und Einstellarbeiten vermieden werden können.

Diese Aufgabe wird erfindungsgemäss auf eine erste, in den Zeichnungen dargelegte Weise dadurch gelöst, dass an dem Kniehebel ein zweiter Anschlag für die Begrenzung der Einknickbewegung des Kniehebels angeordnet ist, dass ein zweites Widerlager für den zweiten Anschlag vorgesehen ist, dass beide Anschläge als an dem ersten Kniehebelschenkel angeformte Ansätze ausgebildet sind, wobei entweder die zweite ortsfeste Achse des zweiten Kniehebelschenkels als erstes und zweites Widerlager für die Ansätze in der Einknickstellung und in der Streckstellung des Kniehebels wirkt, oder die zweite ortsfeste Achse des zweiten Kniehebelschenkels als zweites Widerlager für den zweiten Ansatz in der Einknickstellung und die erste ortsfeste Achse des Anschlagriegels als erstes Widerlager für den ersten Ansatz in der Streckstellung des Kniehebels wirkt.

Eine zweite Lösungsmöglichkeit gemäss der Erfindung besteht darin, dass an dem Kniehebel ein zweiter Anschlag für die Begrenzung der Einknickbewegung des Kniehebels angeordnet ist, dass ein zweites Widerlager für den zweiten Anschlag vorgesehen ist, dass beide Anschläge als an dem zweiten Kniehebelschenkel angeformte Ansätze ausgebildet sind, wobei die erste ortsfeste Achse des Anschlagriegels als erstes und zweites Widerlager für die Ansätze in der Einknickstellung und in der Streckstellung wirkt.

In der Streckstellung ragt der Anschlagriegel in die Palettenbahn hinein, so dass die Paletten an einem Nachrücken gehindert werden. Das über die Schaltklappe nach hinten verschobene Gestänge hat dabei den an dem Anschlagriegel angelenkten Kniehebelschenkel derart verschwenkt, dass der Ansatz sich gegen das ortsfeste Lager des unteren Kniehebelschenkels abstützt, wodurch die Streckstellung des Kniehebels begrenzt ist. Bei hochgeschwenkter Schaltklappe ist das Gestänge nach vorn verschoben, so dass der Kniehebel in die Einknickstellung überführt worden ist. In dieser Stellung stützt sich der andere Ansatz an dem an dem Anschlagriegel angelenkten Kniehebelschenkel gegen die andere Seite des ortsfestes Lagers des unteren Kniehebelschenkels ab. Damit ist die Bewegung des Anschlagriegels gestoppt, so dass auf diesen Anschlagriegel keine Zugkräfte über das Gestänge mehr einwirken können.

Vorzugsweise sind die Ansätze einstückig mit dem Schenkel ausgebildet. Damit ist es möglich, den Schenkel des Kniehebels zusammen mit den Ansätzen beispielsweise auszustanzen, wodurch die Kosten und die Fertigungsprobleme verringert werden.

In weiterer Ausgestaltung der Erfindung können an den Ansätzen einstellbare Anschlagelemente angeordnet sein, welche insbesondere als gekonterte Schrauben ausgebildet sind.

Ausführungsbeispiele der Erfindung werden anhand der Zeichnung erläutert. Es zeigen:

Fig. 1 in schematischer Darstellung eine erste Ausführungsform einer Vorrichtung mit einer in Entnahmestellung befindlichen Palette,

Fig. 2 in schematischer Darstellung die Vorrichtung nach Fig. 1 mit einer in die Entnahmestellung rollenden Palette,

Fig. 3 in vergrösserter Darstellung die Vorrichtung nach Fig. 1 in Seitenansicht mit einer in strichpunktierter Linie dargestellten Variante, und

Fig. 4 in vergrösserter Darstellung die Vorrichtung nach Fig. 3 in Draufsicht.

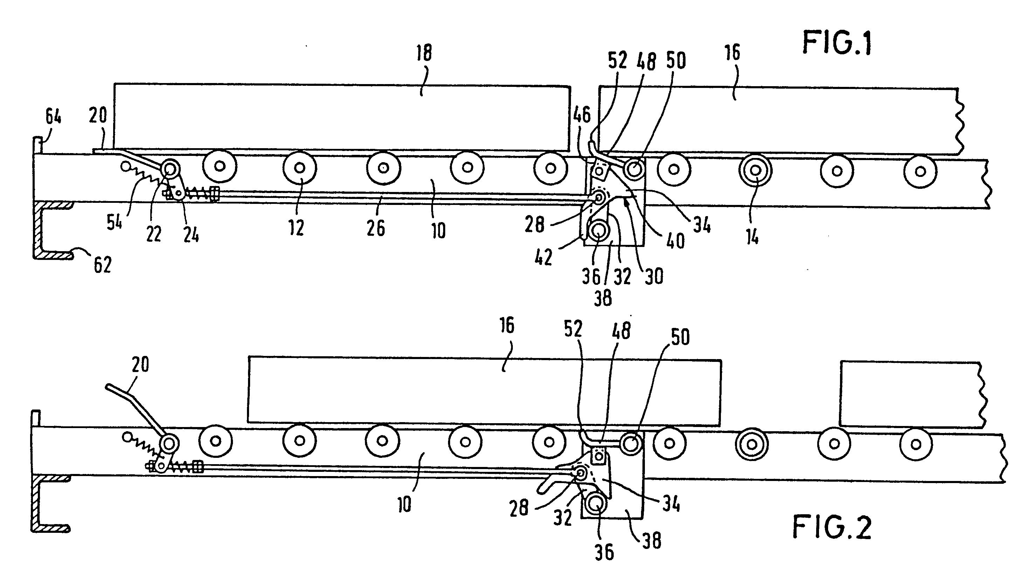

Fig. 1 zeigt einen Längsträger 10 eines Durchlaufregals, an welchem Rollen 12 angeordnet sind. Mit dem Bezugszeichen 14 ist eine Bremsrolle bezeichnet, die die Aufgabe hat, eine über die Rollenbahn ablaufende Palette 16 zu bremsen, so dass diese Palette mit konstanter Geschwindigkeit weiterrollt. Bremsrollen 14 sind auch an dem hinteren Teil der Rollenbahn angeordnet, so dass alle nachlaufenden Paletten eine gewisse Geschwindigkeit nicht überschreiten. Im vorderen Entnahmebereich der Rollenbahn sind keine Bremsrollen vorgesehen.

Im vorderen Bereich der Rollenbahn befindet sich eine auszulagernde Palette 18, an deren Unterseite eine Schaltklappe 20 anliegt. Diese Schaltklappe 20 ist um eine Achse 22 drehbar. An dieser Achse 22 ist ein in der Darstellung nach unten weisender Hebel 24 angebracht, an dem ein Gestänge 26 angelenkt ist. Mit dem anderen Ende ist das Gestänge 26 an dem Gelenk 28 eines Kniehebels 30 gelenkig verbunden. Der Kniehebel besteht aus einem Schenkel 32 und einem Schenkel 34. Der Schenkel 32 ist an seinem anderen Ende an einer Achse 36 befestigt, die drehbar an einer Lagerplatte 38, die an dem Längsträger 10 des Durchlaufregals angeordnet ist, gelagert ist. Der Kniehebelschenkel 32 ist etwa als kurzer Streifen ausgebildet.

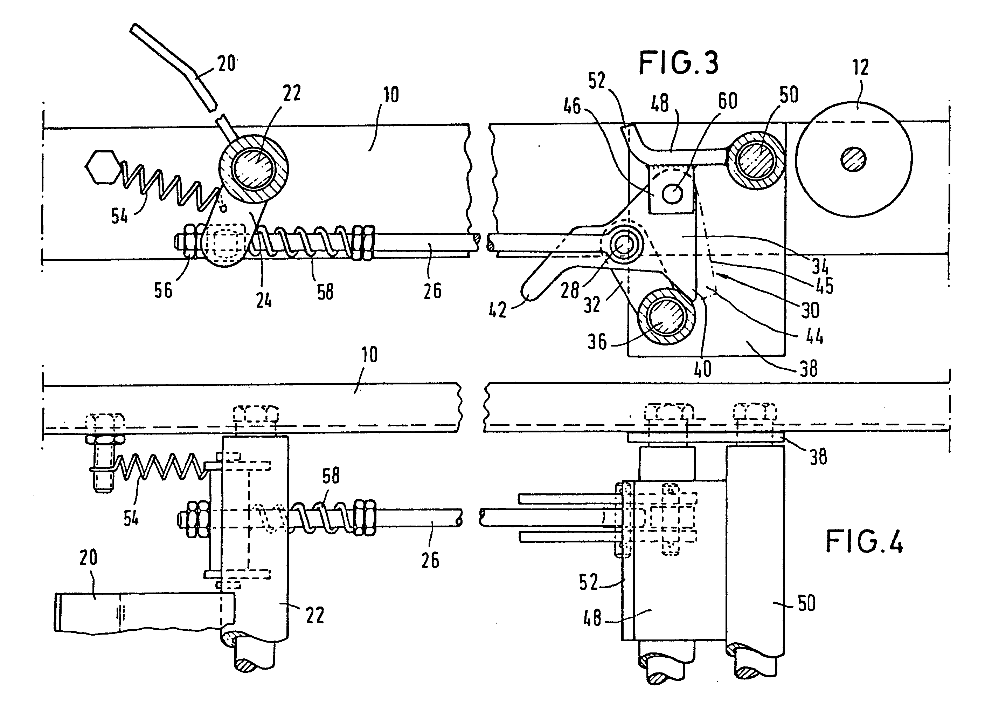

Der andere Schenkel 34 des Kniehebels 30 ist über eine Lagerplatte 46 mit einem Anschlagriegel 48 gelenkig verbunden. Dieser Anschlagriegel 48 ist an einem Ende an einer Achse 50 befestigt, die drehbar zwischen den Längsträgern 10 des Durchlaufregals gelagert ist. Der Anschlagriegel 48 ist an seinem freien Ende 52 gebogen. Wenn die Schaltklappe 20 nicht durch eine Palette 18 niedergedrückt ist, nimmt der Anschlagriegel die insbesondere aus Fig. 3 zu ersehende Stellung ein. Das gebogene Ende 52 verläuft dann in dem Raum zwischen den Längsträgern 10 und ragt nicht über die Rollen 12 bzw. 14 in die Bahn der ablaufenden Paletten 16 hinein.

An dem Hebel 24, der an der Achse 22 der Schaltklappe 20 angebracht ist, greift eine Zugfeder 54 an, die die Vorrichtung bei unbelasteter Schaltklappe 48 in der nicht-sperrenden Stellung hält, d.h. der Kniehebel 30 befindet sich in der Einknickstellung.

Um diese Einknickstellung zu begrenzen, ist der Kniehebelschenkel 34 über die Verbindungslinie des Kniehebelgelenks 28 mit dem Gelenk 60 an der Lagerplatte 46 hinaus mit einem Ansatz 40 versehen, welcher derart winklig ausgebildet ist, dass er am Ende der Einknickstellung gegen die Achse 36 des unteren Kniehebelschenkels 32 ansteht. Dadurch wird ein weiteres Verschwenken des Anschlagriegels 48 nach unten verhindert.

Zur Begrenzung der Streckstellung des Kniehebels 30 ist an dem Kniehebel 34 auf der dem Ansatz 40 gegenüberliegenden Seite der Verbindungslinie zwischen den Gelenken 28 und 60 ein Ansatz 42 in Form eines Fingers ausgebildet, welcher sich bei maximaler Streckstellung des Kniehebels 30 gegen die Vorderseite der Achse 36 des unteren Kniehebels anlegt. Diese Stellung ist insbesondere aus Fig. 1 zu ersehen.

Alternativ zu dem fingerförmigen Ansatz 42 kann der Ansatz 40 verbreitert sein, wie es mit strichpunktierter Linie in Fig. 3 gezeigt ist. Diese Verbreiterung 44 ist derart ausgewählt, dass sich die Kantenfläche 45 in der Streckstellung des Kniehebels 30 gegen die Unterseite der Achse 50 des Anschlagriegels 48 anlegt. Damit wird ein weiteres Verschwenken des Kniehebels 30 vermieden. Es ist ebenfalls denkbar, den unteren Kniehebelschenkel 32 mit Anschlägen auf der der Achse 50 zu gerichteten Seite zu versehen, wobei dann die Achse 50 als Widerlager des entsprechenden Ansatzes in der Einknickstellung und in der Streckstellung dient.

Das Gestänge 26, das mit einem Ende an dem Hebel 24 und mit dem anderen Ende an dem Gelenk 28 des Kniehebels 30 angelenkt ist, kann über Muttern 56 in der Länge eingestellt werden. Um sicherzustellen, dass der Anschlagriegel in die Bahn der nachlaufenden Paletten ragt, bevor die Schaltklappe 20 völlig niedergedrückt ist, ist eine Druckfeder 58 vorgesehen, durch die der Abstand zwischen den Anlenkungspunkten des Gestänges 26 in nicht-sperrendem Zustand länger ist als der Abstand in sperrendem Zustand. Wenn die Schaltklappe 20 niedergedrückt wird, wird das Gestänge 26 nach hinten verschoben, wodurch der Kniehebel 30 in seine gestreckte Lage überführt wird. In dieser Stellung stützt sich der fingerartige Ansatz 42 an der Achse 36 oder die Randfläche 45 des Ansatzes 44 an der Achse 50 des Anschlagriegels ab. Wenn die Schaltklappe völlig niedergedrückt wird, wird durch den Hebel 24 die Druckfeder 58 so weit nach hinten geschoben, bis die Endstellung der Schaltklappe 20 erreicht ist. Das vordere Ende des Gestänges 26 ragt dann aus dem Lagerauge des Hebels 24 hervor.

Durch das Gestänge 26 wird der Kniehebel so weit durchgedrückt, bis das Gelenk 28 um einen geringen Betrag hinter der durch die Achse 36 und die Achse 60 der Schenkel 32 bzw. 34 verlaufenden Geraden liegt. Dadurch wird sichergestellt, dass der auf den Anschlagriegel 48 durch die nachlaufenden Paletten ausgeübte Druck nicht über das Gestänge 26 auf die Schaltklappe 20 übertragen wird, sondern dass der Druck durch den Anschlag 40 und die Achse 36 in die Seitenträger 10 des Durchlaufregals übertragen wird. In Sperrstellung wird demnach die Schaltklappe völlig entlastet.

Die Achsen 22 und 50 sind in der für die Rollen vorgesehenen Lochreihen befestigt. Zusätzliche Bohrungen, die eine Schwächung der Längsträger hervorrufen würden, sind demnach nicht notwendig.

In Fig. 2 ist schematisch die Lage der Vorrichtung dargestellt, wenn die Palette 18 von dem Durchlaufregal entnommen worden ist. Durch die Zugfeder 54 wird die Schaltklappe 48 in ihre nach oben weisende Stellung verdreht, wodurch gleichzeitig das Gestänge 26 nach vorn gezogen und der Kniehebel aus seiner gestreckten Lage in die geknickte Lage überführt wird. In dieser Stellung stützt sich der fingerartige Ansatz 42 gegen die Vorderseite der Achse 36 ab. Damit verbunden ist ein Niederschwenken des Anschlagriegels 48, so dass die Palette 16 infolge ihres Eigengewichts auf den in den schräg angeordneten Seitenträgern 10 gelagerten Rollen 12 nach vorn weiterlaufen kann. Sobald die Palette 16 an die Schaltklappe 20 herangerollt ist, wird diese nach unten bewegt, wodurch der Anschlagriegel 48 nach oben verschwenkt wird. Damit ist sichergestellt, dass eine weitere nachlaufende Palette von dem Anschlagriegel 48 aufgehalten wird.

Am vorderen Ende stützen sich die Längsträger 10 auf einem Querträger 62 ab. Ein Endanschlag 64, der auch in Form eines Auflaufschuhs ausgebildet sein kann, verhindert, dass eine nachlaufende Palette von dem Regal rollen kann.

## Patentansprüche

1. Vorrichtung zum Trennen der auf einer Entnahmeseite auf einer Rollenbahn, insbesondere eines Durchlaufregals, aus einer Entnahmestellung auszulagernden Palette (18) von den über Bremsrollen (14) nachrollenden Paletten (16) mit einer am Ende der Rollenbahn angelenkten Schaltklappe (20) und einem auf Abstand hinter der auszulagernden Palette (18) an der Rollenbahn an einer ersten ortsfesten Achse (50) angelenkten, mit der Schaltklappe (20) über ein Gestänge (26) verbundenen Anschlagriegel (48), wobei der Anschlagriegel an dem freien Ende eines ersten Schenkels (34) eines Kniehebels (30) angelenkt ist, wobei ein zweiter Schenkel (32) des Kniehebels (30) an einem Lager an der Rollenbahn um eine zweite ortsfeste Achse (36) drehbar angeordnet und das Gestänge (26) mit dem Kniehebelgelenk (28) verbunden ist, und wobei an dem Kniehebel (30) ein erster Anschlag für die Begrenzung der Streckbewegung des Kniehebels (30) angeordnet ist und wobei ein erstes Widerlager für den ersten Anschlag vorgesehen ist, dadurch gekennzeichnet, dass an dem Kniehebel (30) ein zweiter Anschlag für die Begrenzung der Einknickbewegung des Kniehebels (30) angeordnet ist, dass ein zweites Widerlager für den zweiten Anschlag vorgesehen ist, dass beide Anschläge als an dem ersten Kniehebelschenkel (34) angeformte Ansätze (40, 42, 44) ausgebildet sind, wobei entweder die zweite ortsfeste Achse (36) des zweiten Kniehebelschenkels (32) als erstes und zweites Widerlager für die Ansätze (40, 42) in der Einknickstellung und in der Streckstellung des Kniehebels (30) wirkt, oder die zweite ortsfeste Achse (36) des zweiten Kniehebelschenkels (32) als zweites Widerlager für den zweiten Ansatz (44) in der Einknickstellung und die erste ortsfeste Achse (50) des Anschlagriegels (48) als erstes Widerlager für den ersten Ansatz (40) in der Streckstellung des Kniehebels (30) wirkt.

2. Vorrichtung zum Trennen der auf einer Entnahmeseite auf einer Rollenbahn, insbesondere eines Durchlaufregals, aus einer Entnahmestellung auszulagernden Palette (18) von den über Bremsrollen (14) nachrollenden Paletten (16) mit einer am Ende der Rollenbahn angelenkten Schaltklappe (20) und einem auf Abstand hinter der auszulagernden Palette (18) an der Rollenbahn an einer ersten ortsfesten Achse (50) angelenkten, mit der Schaltklappe (20) über ein Gestänge (26) verbundenen Anschlagriegel (48), wobei der Anschlagriegel an dem freien Ende eines ersten Schenkels (34) eines Kniehebels (30) angelenkt ist, wobei ein zweiter Schenkel (32) des Kniehebels (30) an einem Lager an der Rollenbahn um eine zweite ortsfeste Achse (36) drehbar angeordnet und das Gestänge (26) mit dem Kniehebelgelenk (28) verbunden ist, und wobei an dem Kniehebel (30) ein erster Anschlag für die Begrenzung der Streckbewegung des Kniehebels (30) angeordnet ist und wobei ein erstes Widerlager für den ersten Anschlag vorgesehen ist, dadurch gekennzeichnet, dass an dem Kniehebel (30) ein zweiter Anschlag für die Begrenzung der Einknickbewegung des Kniehebels (30) angeordnet ist, dass ein zweites Widerlager für den zweiten Anschlag vorgesehen ist, dass beide Anschläge als an dem zweiten Kniehebelschenkel (32) angeformte Ansätze ausgebildet sind, wobei die erste ortsfeste Achse (50) des Anschlagriegels (48) als erstes und zweites Widerlager für die Ansätze in der Einknickstellung und in der Streckstellung wirkt.

3. Vorrichtung nach Anspruch 1 oder 2, dadurch gekennzeichnet, dass die Ansätze (40, 42, 44) einstückig an dem Kniehebelschenkel (34) ausgebildet sind.

4. Vorrichtung nach einem der Ansprüche 1 bis 3, dadurch gekennzeichnet, dass an den Ansätzen (40, 42, 44) einstellbare Anschlagelemente angeordnet sind.

5. Vorrichtung nach Anspruch 4, dadurch gekennzeichnet, dass die Anschlagelemente gekonterte Schrauben sind.

**Claims**

1. Mechanism for separating a pallet (18) to be removed from the extraction position at the discharge end of a roller track, particularly in a through-flow shelf system, from the next pallet (16) arriving via braking rollers (14), having a control flap (20) attached at the end of the roller track, and a stop pin (48) behind and clear of the pallet (18) to be removed attached to a first stationary spindle (50) and coupled by a rod (26) to the control flap (20), the stop pin being attached to the free end of first arm (34) of a toggle lever (30) while a second arm (32) of the toggle lever (30) turns on a bearing on the roller track about a second stationary spindle (36) and the rod (26) is coupled to the toggle lever joint (28), a first lug on the toggle lever (30) limiting the extension movement of the toggle lever (30) and a first stop being provided for the first lug, characterized in that there is a second lug on the toggle lever (30) limiting the collapsing movement of the toggle lever (30) and that both lugs are formed by protrusions (40, 42, 44) on the first toggle lever arm (34), whereby either the second stationary spindle (36) of the second toggle lever arm (32) forms the first and second stops for the lugs (40, 42) in the collapsed and extended positions of the toggle lever (30), or the second stationary spindle (36) of the second toggle lever arm (32) forms the second stop for the second lug (44) in the collapsed position and the first stationary spindle (50) of the stop pin (48) forms the first stop for the first lug (40) in the extended position of the toggle lever (30).

2. Mechanism for separating a pallet (18) to be removed from the extraction position at the discharge end of a roller track, particularly in a through-flow shelf system, from the next pallet (16) arriving via braking rollers (14), having a control flap (20) attached at the end of the roller track, and a stop pin (48) behind and clear of the pallet (18) to be removed attached to a first stationary spindle (50) and coupled by a rod (26) to the control flap (20), the stop pin being attached to the free end of a first arm (34) of a toggle lever (30) while a second arm (32) of the toggle lever (30) turns on a bearing on the roller track about a second stationary spindle (36) and the rod (26) is coupled to the toggle lever joint (28), a first lug on the toggle lever (30) limiting the extension movement of the toggle lever (30) and a first stop being provided for the first lug, characterized in that there is a second lug on the toggle lever (30) limiting the collapsing movement of the toggle lever (30), that a second stop is provided for the second lug and that both lugs are formed by protrusions on the first toggle lever arm (34), whereby the first stationary spindle (50) for the stop pin (48) acts as the first and second stops for the lugs in the collapsed and extended positions.

3. Mechanism according to claim 1 or 2, characterized in that the lugs (40, 42, 44) are formed in one piece with the toggle lever arm (34).

4. Mechanism according to one of claims 1 to 3, characterized in that adjustable lug components are mounted on the lugs (40, 42, 44).

5. Mechanism according to claim 4, characterized in that the lug components are locked screws.

**Revendications**

1. Dispositif pour séparer, sur le côté de reprise sur un transporteur à rouleaux, en particulier d'un transtockeur, les palettes à sortir d'une position de reprise, par rapport aux palettes suivantes passant sur des rouleaux de freinage (14) comportant un volet de commande (20) articulé à l'extrémité du transporteur à rouleaux et un verrou d'arrêt (48) articulé sur le transporteur à rouleaux à un premier axe (50) fixe à une certaine distance derrière la palette (18) à sortir, relié par une tringlerie (26) au volet de commande (20), le verrou d'arrêt étant articulé à l'extrémité libre d'une première branche (34) d'un levier à genouillère (30) dont une deuxième branche (32) est montée sur un palier du transporteur à rouleaux de façon à pouvoir tourner autour d'un deuxième axe (36) fixe, et une première butée étant prévue sur le levier à genouillère (30) pour limiter le mouvement d'extension du levier à genouillère (30), une première contre-butée étant prévue pour la première butée, caractérisé en ce qu'il est prévu sur le levier à genouillère (30) une deuxième butée pour limiter le mouvement d'extension de pliage du levier à genouillère (30), qu'il est prévu une deuxième contre-butée pour la deuxième butée, que les deux butées se présentent sous la forme de saillies (40, 42, 44) formées sur la première branche du levier à genouillère (34), le deuxième axe (36) fixe de la deuxième branche (32) du levier à genouillère jouant le rôle de première et de deuxième contre-butée pour les saillies (40, 42) dans la position de pliage et dans la position d'extension du levier à genouillère (30), ou bien le deuxième axe (36) fixe de la deuxième branche (32) du levier à genouillère jouant le rôle de deuxième contre-butée pour la deuxième saillie (44) dans la position de pliage et le premier axe (50) fixe du verrou d'arrêt (48) jouant le rôle de première contre-butée pour la première saillie (40) dans la position d'extension du levier à genouillère (30).

2. Dispositif pour séparer, sur le côté de reprise d'un transporteur à rouleaux, en particulier d'un transtockeur, la palette (18) à sortir d'une position de reprise, par rapport aux palettes (16) suivantes passant sur des rouleaux de frainage (14), comportant un volet de commande (20) articulé à l'extrémité du transporteur à rouleaux et un verrou d'arrêt (48) articulé sur le transporteur à rouleaux à un premier axe (50) fixe à une certaine distance derrière la palette (18) à sortir, relié par une tringlerie (26) au volet de commande (20), le verrou d'arrêt étant articulé à l'extrémité libre d'une première branche (34) d'un levier à genouillère (30) dont une deuxième branche (32) est montée sur un palier du transporteur à rouleaux de façon à pouvoir tourner autour d'un deuxième axe (36) fixe, et une première butée étant prévue sur le levier à genouillère (30) pour limiter le mouvement d'extension du levier à genouillère (30), une première contre-butée étant prévue pour la première butée, caractérisé en ce qu'il est prévu sur le levier à genouillère (30) une deuxième butée pour limiter le mouvement de pliage du levier à genouillère (32), qu'il est prévu une deuxième contre-butée pour la deuxième butée, que les deux butées sont des saillies formées sur la deuxième branche (32) du levier à genouillère, le premier axe (50) fixe au verrou d'arrêt (48) jouant le rôle de première et de deuxième contre-butée pour les saillies dans la position de pliage et dans la position d'extension.

3. Dispositif selon la revendication 1 ou 2, caractérisé en ce que les saillies (40, 42, 44) sont venues d'une pièce avec la branche (34) du levier à genouillère.

4. Dispositif selon une quelconque des revendications 1 à 3, caractérisé en ce que des éléments de butée réglables sont disposés sur les saillies (40, 42, 44).

5. Dispositif selon la revendication 4, caractérisé en ce que les éléments de butée sont des vis bloquées par contre-écrou.

FIG.1

FIG.2

0 164 527

FIG.3

FIG.4

0 164 527